Europäisches Patentamt

European Patent Office

Office européen des brevets

(19)

(11) **EP 0 651 897 B1**

(12) **EUROPÄISCHE PATENTSCHRIFT**

(45) Veröffentlichungstag und Bekanntmachung des Hinweises auf die Patenterteilung:
**29.12.1997 Patentblatt 1997/52**

(21) Anmeldenummer: **93915649.3**

(22) Anmeldetag: **21.07.1993**

(51) Int Cl.⁶: **G06F 12/02**

(86) Internationale Anmeldenummer:
**PCT/DE93/00642**

(87) Internationale Veröffentlichungsnummer:
**WO 94/02897 (03.02.1994 Gazette 1994/04)**

(54) **VERFAHREN ZUR DYNAMISCHEN VERWALTUNG EINES FREIEN SPEICHERS EINER RECHENANLAGE, DES FREISPEICHERS, FÜR DEN EINE UNTERTEILUNG IN WENIGSTENS ZWEI LOGISCHE SPEICHERBEREICHE, DIE SICH IN IHREN ZUGRIFFSEIGENSCHAFTEN UNTERSCHEIDEN, VORGESEHEN IST**

METHOD FOR THE DYNAMIC MANAGEMENT OF A FREE STORE IN A COMPUTER, THE FREE STORE BEING DESIGNED FOR SUBDIVISION INTO AT LEAST TWO LOGIC ZONES WITH DIFFERENT ACCESS CHARACTERISTICS

PROCEDE DE GESTION DYNAMIQUE D'UNE MEMOIRE LIBRE D'UN ORDINATEUR , CETTE MEMOIRE LIBRE ETANT DESTINEE A ETRE SUBDIVISEE EN AU MOINS DEUX ZONES LOGIQUES A CARACTERISTIQUES D'ACCES DIFFERENTES

(84) Benannte Vertragsstaaten:
**AT BE CH DE FR GB IT LI NL SE**

(30) Priorität: **21.07.1992 DE 4224080**

(43) Veröffentlichungstag der Anmeldung:
**10.05.1995 Patentblatt 1995/19**

(73) Patentinhaber: **SIEMENS AKTIENGESELLSCHAFT 80333 München (DE)**

(72) Erfinder: **MEHNER, Thomas D-85570 Markt Schwaben (DE)**

(56) Entgegenhaltungen:
- **COMMUNICATIONS OF THE ACM Bd. 17, Nr. 10 , Oktober 1974 , US Seiten 558 - 562 K.K.SHEN ET AL. 'A Weighted Buddy Method for Dynamic Storage Allocation'**
- **COMPUTER DESIGN Bd. 21, Nr. 1 , Januar 1982 , WINCHESTER, MASSACHUSETTS, US Seiten 139 - 147 J.F.STOCKTON 'Mainframe Memories for Microcomputers'**
- **386 DX PROGRAMMER'S REFERENCE MANUAL 1989 INTEL 'Kapitel 5,6'**

## Beschreibung

Verfahren zur dynamischen Verwaltung eines freien Speichers einer Rechenanlage, des Freispeichers, für den eine Unterteilung in wenigstens zwei logische Speicherbereiche, die sich in ihren Zugriffseigenschaften unterscheiden, vorgesehen ist

Die Verwaltung des freien Speichers einer Rechenanlage kann in deren Betriebssystemen auf verschiedene Weisen erfolgen. Für die Auswahl des der Speicherverwaltung zugrundeliegenden Algorithmus sind im wesentlichen zwei Kriterien bestimmend. Zum einen kann das Speicherverwaltungsprinzip für kleine begrenzte Hauptspeicher optimiert werden. Das heißt, es ist nur wenig Speicherplatzverschnitt akzeptabel und eine im Betrieb auftretende Speicherfragmentierung kann zu relativ hohen Zugriffszeiten auf den Speicher führen.

Zum anderen kann die Speicherverwaltung für Realzeit-Anwendungen optimiert werden. Dabei ist es besonders wichtig, daß Speicher schnell gefunden und an anfordernde Prozesse zugewiesen werden kann. Es ist ein höherer Speicherplatzverschitt akzeptabel und die auftretende Speicherfragmentierung darf nicht zu einer Behinderung der Verschmelzung von zurückgegebenen Speichersegmenten führen.

Im Falle von Telekommunikations-Anwendungen mit hohen Sicherheitsanforderungen und sehr kritischen Zeitbedingungen wird häufig der zweite Weg gewählt. Insbesondere sind bei der Auswahl eines Speicherverwaltungssystems für ein Telekommunikationssystem folgende Kriterien zu beachten:

- Speicherplatzverschnitt bis zu 50% ist akzeptabel
- Speicherfragmentierung darf auch bei langer Systemlaufzeit und stark pulsierendem Speicherbedarf (z.B. bedingt durch objektorientierte Programmierung) nicht zu schlechterem Laufzeitverhalten oder immer höherem Speicherbedarf führen. Das heißt die Verschmelzung zurückgegebener Speicherbereiche ist zu maximieren.
- Es müssen Echtzeitanforderungen erfüllt werden. Das heißt die Vorgänge des Anforderns und Zurückgebens von Speicher müssen eine hohe dynamische Effizienz aufweisen. Insbesondere dürfen sie keine Suchvorgänge enthalten, die mit zunehmender Zahl von verwalteten Speicherstücken immer länger dauern. Weiterhin sind Gesamtspeicherbereinigungen, die ein Anhalten des Systems für deren Dauer erfordern, nicht einsetzbar.
- Telekommunikationsanwendungen erfordern die Möglichkeit einer gestuften Rücksetzbarkeit (d.h. Reinitialisierung von Daten und Prozessen). Dazu ist es notwendig, ohne zusätzlichen Speicherverschnitt mehrere getrennte logische Speicherbereiche, die sich in der Art des Zugriffs unterscheiden auf dem gleichen physikalischen Speicher zu verwalten.

- Um den hohen Sicherheitsanforderungen Rechnung zu tragen, muß die Auswirkung von Fehlern in der Anwendersoftware weitestgehend einschränkbar sein. Deshalb müssen insbesondere die Speicherschutzmechanismen, wie sie die Prozessoren in der Rechenanlage vorsehen soweit wie möglich eingesetzt werden, ohne die Laufzeiteffizienz des Programmes zu gefährden.

Aufgrund dieser einschränkenden Kriterien kommt als Basis für eine Speicherverwaltung in einer Telekommunikationsanwendung nur das Buddy-System in Frage, wie es in Knuth, D.E.: The Art of Computer Programming, Vol. 1, Addison-Wesley, Reading, Mass., 1986, 2nd ed., 1973 beschrieben wird.

Nach dem Buddy-Algorithmus wird Speicher nur in sog. zulässigen Größen vergeben. Jede von einem Prozeß angeforderte Speichergröße wird auf die nächstgrößere zulässige Größe aufgerundet. Zu jeder zulässigen Größe existiert eine ungeordnete Liste von freien Stücken. Bei Speicheranforderungen mit einer bestimmten Größe, wird zuerst diese Liste daraufhin überprüft, ob ein freies Element der nächsten zulässigen Größe vorhanden ist. Falls dieses der Fall ist, wird es dem anfordernden Prozeß zugewiesen. Falls dies nicht der Fall ist, wird iterativ ein freies Element der nächstgrößeren freien Größe geteilt. Dieser Vorgang findet solange statt, bis man ein Element erhält, welches seiner Größe nach dem nächst größeren zulässigen, im Vergleich mit der angeforderten Speichergröße entspricht. Dieses wird dann dem anfordernden Prozeß zugewiesen.

Falls der Buddy-Algorithmus für den anfordernden Prozeß kein geeignetes Element der entsprechenden Größe mehr finden kann, oder durch Teilung aus anderen Elementen erzeugen kann, so belegt er aus dem noch freien Speicherbereich ein Element maximaler Größe und erzeugt durch Teilung ein Element, welches der gewünschten zulässigen Größe entspricht.

Bei der Rückgabe eines Speicherstückes, welches von einem Prozeß angefordert war, wird die Adresse dessen Nachbarspeicherstücks berechnet (abhängig von den zulässigen Speichergrößen). Das Segment wird eingefügt und falls das Nachbarstück frei ist, werden beide verschmolzen und in der Liste unter der Größe eingetragen, die sich nach der Verschmelzung ergibt. Der Vorgang der Verschmelzung wird solange fortgesetzt, wie noch freie Speicherstücke entsprechender Größe vorhanden sind bzw. bis die größtmögliche zulässige Speichersegmentgröße erreicht ist.

Ebenso werden in: Communications of the ACM, Bd. 17, Nr. 10, Oktober 1974, US, Seiten 558-562, K.K. Shen et al. ,,A Weighted Buddy Method for Dynamic Storage Allocation" und Computer Design, Bd. 21, Nr. 1, Januar 1982, Winchester, Massachussets, US, Seiten 139-147, J.F. Stockton ,,Mainframe Memories for Microcomputers" Speicherverwaltungsverfahren beschrieben. Daraus ist ein Verfahren zur dynamischen Verwaltung eines freien Speichers, in dem der Freispeicher nach dem Buddy-Algorithmus in Segmente unterteilt wird, bekannt. Die Segmentgröße, welche einem logischen Speicherbereich aus dem Freispeicher zugeordnet wird, entspricht dabei der im Buddy-Algorithmus als maximal vorgegebenen Segmentgröße, der Maximalgröße. Aus: 386 DX Programmer's Reference Manual 1989 Intel, Kapitel 5 und 6, ist eine Beschreibung des Mikroprozessors 80286 bekannt, bei dem die Verwaltungsdaten für den Speichersegmentschutz in der GDT (Global Discripter Table) und der LDT (Local Discripter Table) verwaltet werden.

Bisher ist kein Speicherverwaltungsverfahren bekannt, welches den Anforderungen an hohe Laufzeiteffizienz und unterschiedlichen Zugriffs/Rücksetz-Bedingungen für verschiedene Daten und Prozesse Rechnung trägt.

Die der Erfindung zugrundeliegende Aufgabe besteht darin, ein Verfahren anzugeben, welches für verschiedene Daten und Prozesse unterschiedliche Zugriffs- und Rücksetzbedingungen erlaubt und welches eine hohe Laufzeiteffizienz mit einer großen Zugriffssicherheit verbindet.

Dieses Verfahren wird gemäß den Merkmalen des Patentanspruchs 1 gelöst.

Alle übrigen Weiterbildungen der Erfindung ergeben sich aus den Unteransprüchen.

Besonders vorteilhaft ist es, daß nach dem erfindungsgemäßen Verfahren für unterschiedliche Zugriffs- und Rücksetzbedingungen separate logische Speicherbereiche definiert sind, die mit getrennten Buddy-Verwaltungsalgorithmen bearbeitet werden.

Besonders günstig beim Einsatz des erfindungsgemäßen Verfahrens ist es nach dem Löschen eines logischen Speicherbereichs, diesen seiner Größe nach zu erhalten, da dann keine Lücken im freien Speicher auftreten können.

Vorteilhaft ist es beim erfindungsgemäßen Verfahren einen Segmentschutz für jene Segmente vorzusehen, die im Buddy-Algorithmus als größte zulässige Speichersegmente erlaubt sind, sobald sie zugeordnet werden.

Dies hat folgende Vorteile:

- es muß nur eine Segmentgröße verwaltet werden;
- nur bei Neuzuordnung ganzer Segmente zu einem Speicherbereich entsteht Aufwand für den Speicherschutz, nicht bei einzelnen Speicherplatzanforderungen bzw. -rückgaben (Laufzeiteffizient!);
- die i.d.R. beschränkte Zahl schützbarer Segmente ist ausreichend auch für große Speicher.

Trotz dieses geringen Aufwandes wird erreicht, daß Prozesse, die auf ein Segment zugreifen oder auf eine Untereinheit eines Segmentes zugreifen, bei einer fehlerhaften Adreßberechnung nicht über diese Segmentgröße hinausschreiben können und damit Daten in anderen Segmenten eventuell sogar anderen logischen Speicherbereichen zerstören können.

Weiterhin ist es vorteilhaft, beim erfindungsgemäßen Verfahren, falls ein Segmentschutz durchgeführt wird, die Daten, die diesen Segmentschutz kennzeichnen, in aafür vorgesehenen Tabellen, oder Listen, oder Speicherbereichen einzutragen, da sie dann schnell auffindbar und leicht verwalbar sind.

Wichtige, weil änderbare und kennzeichnende Merkmale für das erfindungsgemäße Verfahren, die den Schutz betreffen, sind die Anfangsadresse, die Segmentlänge und die Zugriffsart auf ein Segment.

Günstig für den Einsatz des erfindungsgemäßen Verfahrens ist ein Prozessor ab dem der 80386 Mikroprozessor, da er einen Segmentschutz für bestimmte Speichersegmente des physikalischen Freispeichers vorsieht.

Günstig ist es auch im Zusammenhang mit dem Einsatz eines Mikroprozessors ab 80286 für das erfindungsgemäße Verfahren, die Verwaltungsdaten für den Speichersegmentschutz in der GDT (Global Descriptor Table) und der LDT (Local Descriptor Table) zu verwalten, da ein Zugriff des Prozessors auf diese Tabellen besonders schnell und einfach erfolgen kann.

Besonders günstig beim Einsatz des erfindungsgemäßen Verfahren ist es, Speichersegmentlängen für den Buddy-Algorithmus zuzulassen, die sich im Bereich von $2^5$ bis $2^{16}$k bewegen. Dies hat zur Folge, daß ein geringer Speicherbedarf für die Verwaltung der Segmentdaten erforderlich ist und daß die Berechnungen für die Teilung und die Verschmelzung der Segmente dynamisch effizient erfolgen können.

Im folgenden wird die Erfindung anhand von Figuren weiter erläutert.

Die Figuren 1 und 2 zeigen Momentaufnahmen aus dem Betrieb einer Speicherverwaltung, die nach einem erfindungsgemäßen Verfahren arbeitet, bei dem mit dem Buddy-Algorithmus zwei logische Speicherbereiche A und B verwaltet werden.

Die Figuren 3 und 4 zeigen Momentaufnahmen vom Betrieb einer erfindungsgemäßen Speicherverwaltung, die die Vorgänge beim Rücksetzen eines logischen Speicherbereichs verdeutlichen.

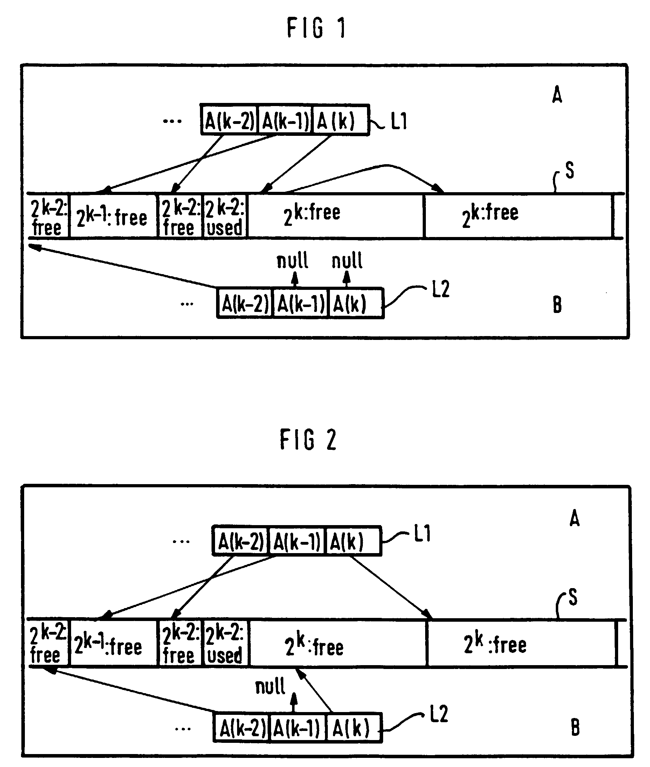

Figur 1 zeigt eine Momentaufnahme aus dem Betrieb einer erfindungsgemäßen Speicherverwaltung, die auf zwei logische Speicherbereiche einwirkt. Es wird der physikalische Speicher S eines Rechners verwaltet.

Dabei kann es sich um eine normale Rechenanlage, oder um eine Telekommunikationsrechenanlage handeln. Die zur Verfügung stehenden Speichersegmente für den logischen Speicherbereich A sind in der Liste L1 geführt. Die für den logischen Speicherbereich B zur Verfügung stehenden Speichersegmente werden in der Liste L2 geführt.

Wie man in Figur 1 deutlich sieht, ist der zur Verfügung stehende Speicher S durch den Buddy-Algorithmus in verschieden große Teilsegmente aufgeteilt worden. Diese Teilsegmente sind durch ihre Größe und durch ihre Belegung gekennzeichnet.

Free bedeutet freies Speichersegment und used bedeutet zugeordnetes Speichersegment. Die Größe ist mit Zweierpotenzen von K bezeichnet.

In der Liste L1 für den Speicherbereich A sind Elemente der Größe k-2, k-1 und k vorhanden. Die Liste verweist auf die Adressen am Beginn der jeweiligen Segmente im physikalischen Speicher S. Dabei wird immer auf das erste Element im Speicher gewiesen und falls ein weiteres Element derselben Größe vorhanden ist, wird von diesem Element auf den Beginn des nächsten verwiesen, wie man deutlich in Figur 1 für den logischen Speicherbereich A und für die Größe $2^k$ sehen kann. Da die maximal zulässige Größe für den Buddy-Algorithmus hier als k definiert ist, werden die beiden nebeneinanderliegenden freien Speichersegmente mit der Größe $2^k$ nicht verschmolzen.

In der Liste L2 für den logischen Speicherbereich B sind auch Elemente der Größen k-2, k-1 und k geführt. Dem logischen Speicherbereich B stehen jedoch nur Segmente der Größen k-2 zur Verfügung. Die Pfeile der beiden anderen Segmente k-1 und k weisen auf Null. Das heißt Speicheranforderungen an den logischen Speicherbereich B die größere Elemente als k-2 erfordern, können derzeit nicht aus dem bereits zugeordneten Speicherbereich erfüllt werden. Es müßte für B in diesem Fall aus dem vorhandenen physikalischen Speicher S ein neuer Bereich der Größe $2^k$ belegt werden.

Figur 2 zeigt eine Momentaufnahme aus dem Betrieb einer erfindungsgemäßen Speicherverwaltung, die nach dem Zeitpunkt der Momentaufnahme, der in Figur 1 dargestellten Version gemacht wurde. Die verwendeten Bezugszeichen sind äquivalent. Gesetz den Fall, die erfindungsgemäße Speicherverwaltung ist im Betrieb und es liegt ein Zustand wie er in Figur 1 dargestellt ist, vor.

Nun erfolgt eine Speicheranforderung aus dem logischen Speicherbereich B mit einer Speichergröße k. Da, wie man aus Liste L2 in Figur 1 erkennen kann, kein Segment der Größe k für den logischen Speicherbereich B zur Verfügung steht, müßte aus den Speicher S ein neues Speichersegment abgegrenzt werden und dem Speicherbereich B zugeordnet werden. Dies ist hier jedoch nicht der Fall, da der physikalische Speicher S bereits vollständig den beiden logischen Speicherbereichen A und B zugeordnet wurde. Das erfindungsgemäße Verfahren sieht nun vor, daß die Buddy-Verwaltungen der anderen logischen Speicherbereiche durchsucht und daraufhin überprüft werden, ob dort ein Element der gewünschten größten zulässigen Größe zu finden ist. Die Suche führt hier beispielsweise beim logischen Speicherbereich A zum Ziel.

Das erfindungsgemäße Verfahren sieht nun vor, daß die dort vorhandenen freien Speichersegmente dazu verwendet werden, um den Bedarf im Speicherbereich B zu decken. Dies geschieht dadurch, daß nun in der Liste L2 die Startadresse des Speicherbereichs mit der Größe k an die Liste L2 übergeben wird und nun dem Speicherbereich B zugeordnet ist. In der Liste L1 wird diesem Sachverhalt dadurch Rechnung getragen, daß nun der Zeiger für die Elemente der Größe k auf die Startadresse des hinter dem Element, das in der Liste L2 geführt wird, verweist.

Falls nun kein Element der Größe k vom Speicherbereich B angefordert würde, sondern eines das größer ist als k-2 und kleiner oder gleich k, dann würde der Buddy-Algorithmus das Element der Größe k solange teilen, bis die nächstgrößere Größe als die angeforderte mit dem Teilungsvorgang erreicht ist. Dieses Element wird dann dem speicheranfordernden Prozeß zugewiesen.

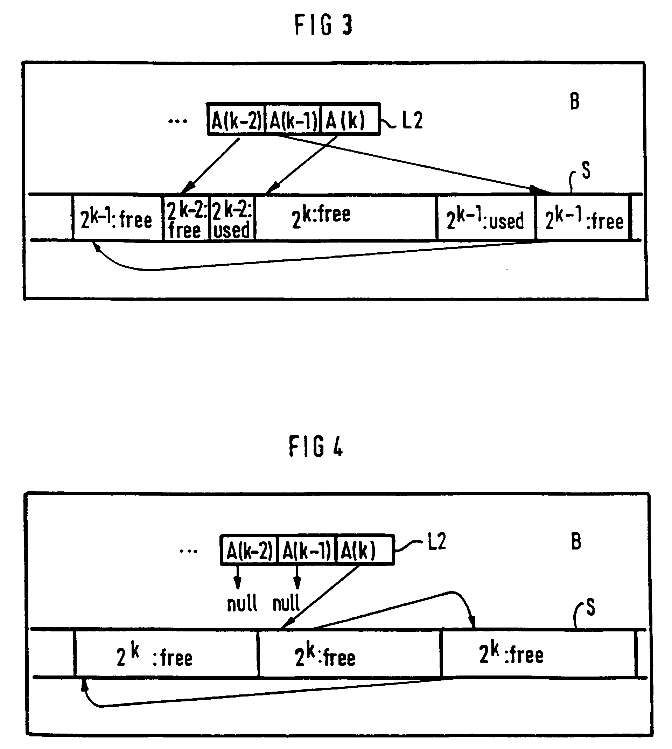

Figur 3 zeigt eine Momentaufnahme des logischen Speicherbereichs B, der nach dem erfindungsgemäßen Verfahren verwaltet wird. Die Bezugszeichen sind analog wie in den Figuren verwendet. Aus der Liste L2 für den Speicherbereich B wird auf Speichersegmente der Größe k-2, k und k-1, wie das durch Pfeile dargestellt ist, verwiesen. Diese Pfeile zeigen auf die Anfangsadressen der entsprechenden Speichersegmente im physikalischen Speicher S der Rechenanlage. Speichersegmente derselben Größe sind miteinander verkettet, d.h. es wird vom Ende desjenigen Elements auf das aus der Liste verwiesen wird, auf die Anfangsadresse des nächsten Elements der gleichen Größe im physikalischen Speicher S verwiesen.

Ein Anwendungsfall für die Definition logischer Speicherbereiche kann z.B. eine Telekommunikationsanwendung sein. Im logischen Speicherbereich A würden dann hier die benutzerrelevanten Daten der Teilnehmer erfaßt und im Speicherbereich B die aktuellen Verbindungsdaten geführt. Die in den Listen L geführten Speichersegmente der Größe k können auch, wie es das erfindungsgemäße Verfahren vorsieht mit einem entsprechenden Zugriffschutz versehen werden. Dieser hat zur Folge, daß im Falle einer Fehlberechnung der Adressen durch die Anwendersoftware nicht über die Größe eines so geschützten Segmentes hinaus in andere, benachbarte Segmente hineingeschrieben werden kann. Dies gewährt eine größere Betriebssicherheit der gesamten Anwendungssoftware.

Figur 4 zeigt eine Momentaufnahme des logischen Speicherbereichs B und des physikalischen Speichers S, die nach dem Zeitpunkt der in Figur 3 dargestellten Version gemacht wurde.

Der logische Speicherbereich B wurde in Figur 4 nach Art des erfindungsgemäßen Verfahrens zurückgesetzt. Wie man deutlich erkennen kann, gibt es nur noch Elemente der Maximalgröße K, die als Segmente im Speicher S aneinandergefügt sind. Die benutzerrelevanten Daten einer Telekommunikationseinrichtung beispielsweise sind von diesem Rücksetzvorgang nicht betroffen. Sie existieren nach wie vor in derselben Form wie sie vor dem Rücksetzen des logischen Speicherbereichs B vorgelegen haben auf dem physikalischen Speicher S im logischen Speicherbereich A. Als Konsequenz des Rücksetzvorgangs existieren in der Liste L2 nur noch Verweise auf Speichersegmente der Größe k. Die Größe k-2 und k-1 wird auf Null verwiesen. Das heißt keine Elemente dieser Größen sind vorhanden. Die Segmente der Größe k verweisen wechselseitig aufeinander wie das schon zuvor in Figur 3 besprochen wurde.

Diese Rücksetz-Vorgehensweise beim erfindungsgemäßen Verfahren hat den Vorteil, daß im physikalischen Speicher S keine Lücken nach dem Rücksetzen auftreten, sodaß das erfindungsgemäße Verfahren noch weiterhin Speichersegmente von einem logischen Speicherbereich an den anderen logischen Speicherbereich übergeben kann, falls dies nach den entsprechenden Vorbedingungen erforderlich ist.

**Patentansprüche**

1. Verfahren zur dynamischen Verwaltung eines freien Speichers einer Rechenanlage, des Freispeichers, für den eine Unterteilung in wenigstens zwei logischen Speicherbereiche (A, B), die sich in ihren Zugriffseigenschaften unterscheiden, vorgesehen ist, mit folgenden Merkmalen:

   a) der Freispeicher (S) wird nach dem Buddy-Algorithmus in Segmente unterteilt,
   b) für jeden logischen Speicherbereich (A, B) wird eine getrennte Liste (L1, L2) der zur Verfügung stehenden Speichersegmente für den jeweiligen Speicherbereich geführt,
   c) die Segmentgröße die einem logischen Speicherbereich (A, B) aus dem Freispeicher (S) zugeordnet wird, entspricht der im Buddy-Algorithmus als maximal vorgegebenen Segmentgröße der Maximalgröße,
   d) bei einer Speicheranforderung an einen logischen Speicherbereich (A) wird diesem aus dem Freispeicher (S) ein Segment zugeordnet, falls in der jeweiligen Liste (L1, L2) der zur Verfügung stehenden Speichersegmente für den jeweiligen logischen Speicherbereich (A, B) kein genügend großes Speichersegment vorhanden ist,
   e) falls einer Speicheranforderung aus einem logischen Speicherbereich (A, B), welche eine Zuordnung aus dem Freispeicher (S) bedingt, nicht mehr Rechnung getragen werden kann, da der Freispeicher (S) bereits vollständig zugeordnet ist, so werden die Listen der zur Verfügung stehenden Speichersegmente der jeweils anderen Speicherbereiche (A, B) daraufhin überprüft, ob dort Segmente mit Maximalgröße vorhanden sind und, falls diese Bedingung erfüllt ist, wird von dort ein solches Segment übernommen und der entsprechenden Liste (L1, L2) zugeordnet.

2. Verfahren nach Anspruch 1,
   bei dem nach Entfernung des Adressbereiches eines logischen Speicherbereiches dieser seiner Größe nach erhalten bleibt.

3. Verfahren nach einem der Ansprüche 1 oder 2,
   bei dem falls die Rechenanlage einen Speichersegmentschutz vorsieht, jene Segmente mit Schutz versehen werden, welche einem logischen Speicherbereich zugeordnet werden.

4. Verfahren nach Anspruch 3,
   bei dem Segmentschutzmerkmale der aus dem Freispeicher zugeordneten Segmente in dafür vorgesehenen Speicherbereichen abgelegt werden.

5. Verfahren nach Anspruch 4,
   bei dem die Segmentschutzmerkmale Anfangsadresse, Segmentlänge und Zugriffsart sind.

6. Verfahren nach einem der Ansprüche 3 bis 5,
   bei dem die Rechenanlage ein Mikroprozessor ab 80286 ist.

7. Verfahren nach einem der Ansprüche 1 bis 6,
   bei dem die zulässige Segmentgröße im Buddy-Algorithmus $2^k$ mit folgender Bedingung für k beträgt:

$$5 \leq k \leq 16.$$

**Claims**

1. Method for the dynamic management of a free store of a computer, the free store, for which subdivision into at least two logical store areas (A,B) with different access characteristics is provided, having the following features:

   a) the free store (S) is subdivided into segments on the basis of the buddy algorithm,
   b) a separate list (L1,L2) of the store segments available for the respective store area is kept for each logical store area (A,B)
   c) the segment size which is assigned to a logical store area (A,B) from the free store (S) corresponds to the segment size of the maximum size prescribed as the maximum in the buddy algorithm,
   d) in the event of a store request to a logical store area (A), the latter is assigned a segment from the free store (S) if there is no store segment of sufficient size available in the respective list (L1,L2) of the store segments available for the respective logical store area (A,B),
   e) if it is no longer possible to cater for a store request from a logical store area (A,B) which requires an assignment from the free store (S), since the free store (S) has already been completely assigned, the lists of the available store segments of the respectively other store areas (A,B) are checked to ascertain whether there are segments there with the maximum size and, if this condition is met, such a segment is taken over from there and assigned to the corresponding list (L1, L2).

2. Method according to Claim 1, in which, after removal of the address area of a logical store area, the latter is retained in its size.

3. Method according to one of Claims 1 or 2, in which, if the computer provides store segment protection, those segments which are assigned to a logical store area are provided with protection.

4. Method according to Claim 3, in which segment protection features of the segments assigned from the free store are deposited in store areas provided for the purpose.

5. Method according to Claim 4, in which the segment protection features are the initial address, the segment length and the type of access.

6. Method according to one of Claims 3 to 5, in which the computer is a microprocessor from 80286.

7. Method according to one of Claims 1 to 6, in which the admissible segment size in the buddy algorithm is $2^k$ with the following condition for k:

$$5 \leq k \leq 16.$$

**Revendications**

1. Procédé de gestion dynamique d'une mémoire libre d'un ordinateur, cette mémoire libre étant destinée à être subdivisée en au moins deux zones logiques de mémoire (A, B) à caractéristiques d'accès différentes, avec les caractéristiques suivantes:

   - la mémoire libre (S) est divisée en segments conformément à l'algorithme de Buddy,
   - pour chaque zone logique de mémoire (A, B), on assure une liste distincte (L1, L2) des segments de mémoire disponibles pour la zone de mémoire respective,
   - la dimension de segment, qui est attribuée à une zone logique de mémoire (A, B) à partir de la mémoire libre (S), correspond à la dimension de segment définie comme maximum dans l'algorithme de Buddy, la "dimension maximum",
   - lors d'une demande de mémoire à une zone logique de mémoire (A), un segment est attribué à cette zone à partir de la mémoire libre (S) s'il n'y a pas de segment de mémoire suffisamment grand dans la liste respective (L1, L2) des segments de mémoire disponibles pour la zone logique de mémoire (A, B) correspondante,

   - lorsqu'une demande de mémoire provenant d'une zone logique de mémoire (A, B), qui supposerait une attribution à partir de la mémoire libre (S), ne peut pas être prise en compte parce que la mémoire libre a déjà été complètement attribuée, les listes des segments de mémoire disponibles des autres zones respectives de mémoire (A, B) sont explorées pour déterminer si des segments de la "dimension maximum" s'y trouvent et, si cette condition est remplie, un de ces segments est soustrait de la liste en question et attribué à la liste respective (L1, L2).

2. Procédé conforme à la revendication 1, au cours duquel, après la suppression de la zone d'adresse d'une zone logique de mémoire, cette dernière est conservée selon sa dimension.

3. Procédé conforme à une des revendications 1 ou 2, au cours duquel, si l'ordinateur prévoit une protection des segments de mémoire, une protection est appliquée à tout segment attribué à une zone logique de mémoire.

4. Procédé conforme à la revendication 3, au cours duquel les caractéristiques de protection des segments attribués à partir de la mémoire libre sont stockées dans des zones de mémoires prévues à cet effet.

5. Procédé conforme à la revendication 4, dans lequel les caractéristiques de protection des segments sont l'adresse de début, la longueur du segment et le mode d'accès.

6. Procédé conforme à une des revendications 3 à 5, pour lequel l'équipement de calcul est un microprocesseur à partir de 80286.

7. Procédé conforme à une des revendications 1 à 6, dans lequel la dimension de segment autorisée dans l'algorithme de Buddy est $2^k$, k satisfaisant la condition suivante:

$$5 \leq k \leq 16.$$

# FIG 1

# FIG 2

## FIG 3

## FIG 4